# EUROPEAN PATENT SPECIFICATION

(11) **EP 4 404 690 B1**
(45) Date of publication and mention of the grant of the patent: **04.11.2026**
(21) Application number: 22870368.2
(22) Date of filing: 19.09.2022
(51) Int. Cl.: H04W 76/40, H04W 76/11, H04W 76/38, H04W 4/06, H04W 4/021

(54) **METHOD AND APPARATUS FOR PROVIDING MBS IN WIRELESS COMMUNICATION SYSTEM**
VERFAHREN UND VORRICHTUNG ZUR BEREITSTELLUNG VON MBS IN EINEM DRAHTLOSKOMMUNIKATIONSSYSTEM
PROCÉDÉ ET APPAREIL POUR FOURNIR UN MBS DANS UN SYSTÈME DE COMMUNICATION SANS FIL

(30) Priority: 17.09.2021 KR 20210125118
(43) Date of publication of application: 24.07.2024
(73) Proprietor: LG Electronics Inc., Yeongdeungpo-gu Seoul 07336 (KR)
(72) Inventor: KIM, Laeyoung, Seoul 06772 (KR)
(74) Representative: Mooser, Sebastian Thomas
(86) International application number: PCT/KR2022/013937
(87) International publication number: WO 2023/043286

(56) References cited:
- KR-A- 20180 105 966
- KR-A- 20190 077 514
- KR-B1- 102 047 884
- US-A1- 2019 200 264
- US-A1- 2021 176 725
- NOKIA ET AL: "Individual Delivery for location-Based Multicast services", vol. SA WG2, no. e-meeting; 20210816 - 20210827, 10 August 2021 (2021-08-10), XP052054155, Retrieved from the Internet <URL:https://ftp.3gpp.org/tsg_sa/WG2_Arch/TSGS2_146E_Electronic_2021-08/Docs/S2-2106420.zip S2-2106420 PCR 23.247 Individual delivery for location based services.docx> [retrieved on 20210810]
- "3rd Generation Partnership Project; Technical Specification Group Services and System Aspects; Architectural enhancements for 5G multicast-broadcast services; Stage 2 (Release 17)", 8 September 2021 (2021-09-08), XP052052383, Retrieved from the Internet <URL:https://ftp.3gpp.org/tsg_sa/TSG_SA/TSGS_93E_Electronic_2021_09/Docs/SP-210941.zip 23247-Diff_100-200.zip 23247-Diff_100-200.docx> [retrieved on 20210908]
- LG ELECTRONICS: "Clarification on Inactivity Timer set by SMF", 3GPP DRAFT; S2-2105575, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. E (e-meeting); 20210816 - 20210827, 10 August 2021 (2021-08-10), Mobile Competence Centre ; 650, route des Lucioles ; F-06921 Sophia-Antipolis Cedex ; France, XP052055788
- ERICSSON: "Update [7.2.2] UE leave MBS Session and MBS Session release", 3GPP DRAFT; S2-2106929, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. E-Meeting; 20210816 - 20210827, 29 August 2021 (2021-08-29), Mobile Competence Centre ; 650, route des Lucioles ; F-06921 Sophia-Antipolis Cedex ; France, XP052059444

## Description

### Technical Field

The following description relates to a wireless communication system and a method and apparatus for providing an MBS (multicast/broadcast service). Specifically, it relates to a method and apparatus for providing an MBS based on a timer for a terminal that moves out of an MBS service area.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

NOKIA ET AL: "Individual Delivery for location-Based Multicast services", 3GPP DRAFT; S2-2106420, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210816 - 20210827 10 August 2021 describes an individual delivery local multicast service with location-dependent content using Namf_EventExposure service.

### Disclosure

### Technical Problem

Th present disclosure relates to a method and apparatus for providing an MBS service in a wireless communication system.

The present disclosure relates to a method and apparatus for providing an MBS service based on whether a terminal is located within an MBS service area in a wireless communication system.

The present disclosure relates to a method and apparatus for starting a timer based on a terminal moving out of an MBS service area in a wireless communication system.

The present disclosure relates to a method and apparatus for providing an MBS service based on whether or not a timer for a terminal moving out of an MBS service area expires in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Advantageous Effects

Th present disclosure can provide an MBS service in a wireless communication system.

The present disclosure can provide an MBS service based on whether a terminal is located within an MBS service area in a wireless communication system.

The present disclosure can provide a method of starting a timer based on a terminal moving out of an MBS service area in a wireless communication system.

The present disclosure can provide an MBS service based on whether or not a timer for a terminal moving out of an MBS service area expires in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a diagram showing a method of providing a local multicast service applicable to the present disclosure.
FIG. 11 is a diagram showing a method of enabling a terminal to leave an MBS session.
FIG. 12 is a diagram showing a method of removing a multicast session based on a network request applicable to the present disclosure.
FIG. 13 is a diagram showing a method of managing whether a terminal leaves an MBS service area in a network applicable to the present disclosure.
FIG. 14 is a diagram showing a method of managing whether a terminal leaves an MBS service area based on a terminal applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a **3GPP2 system,** and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/SGS

3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

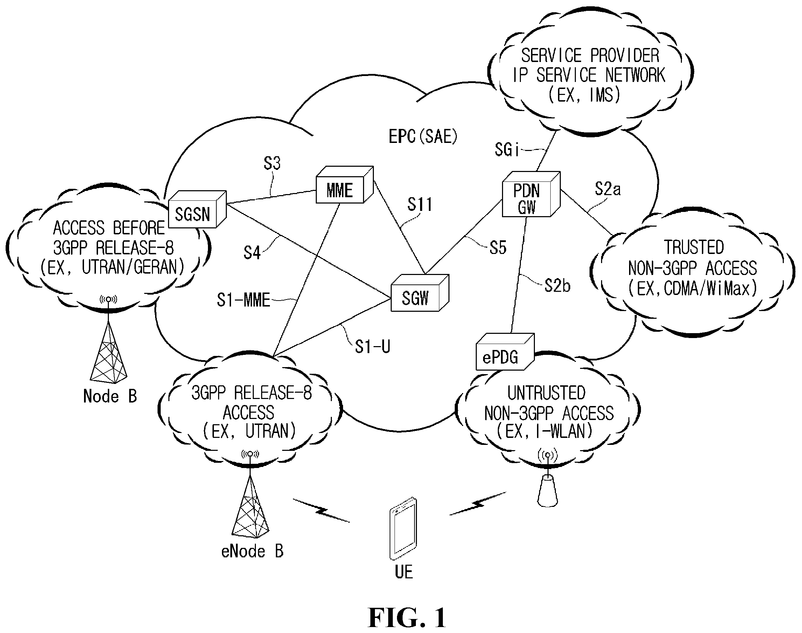

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

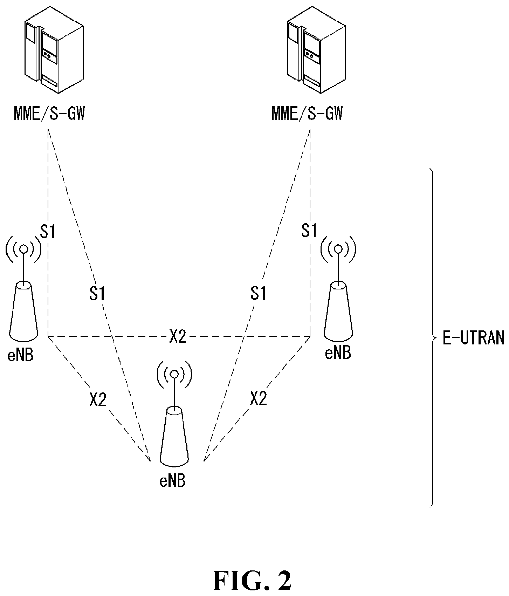

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

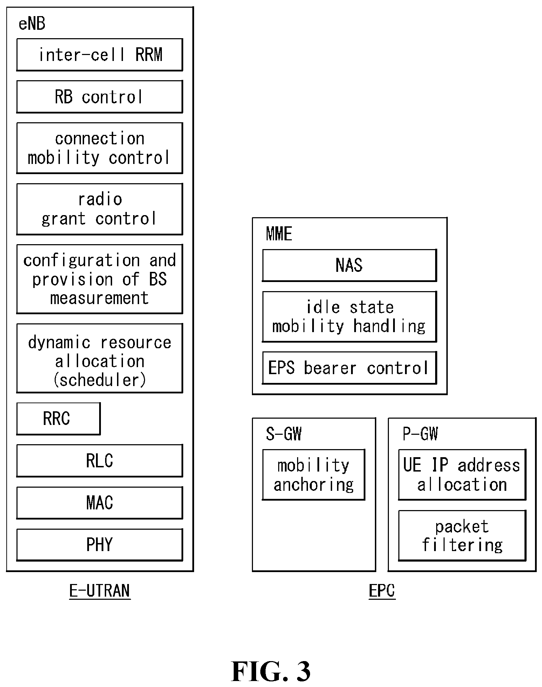

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

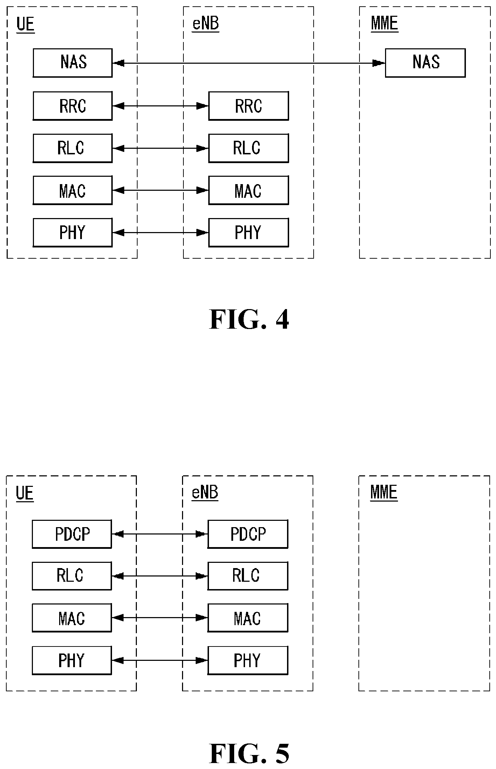

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

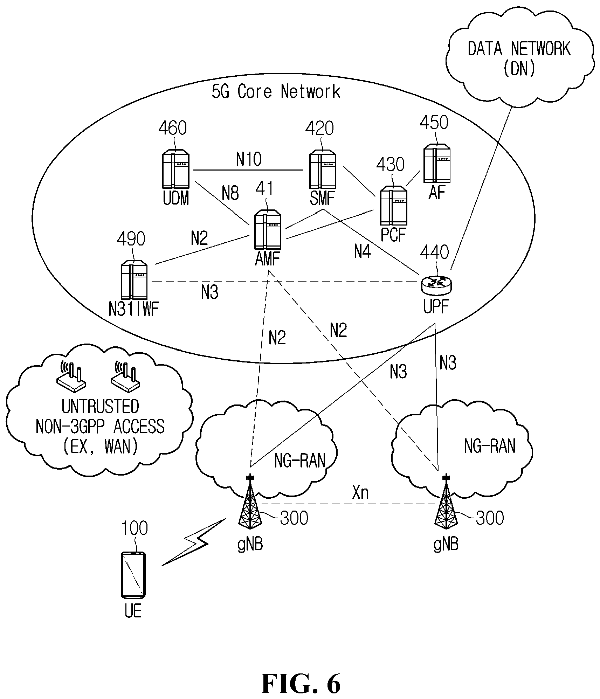

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

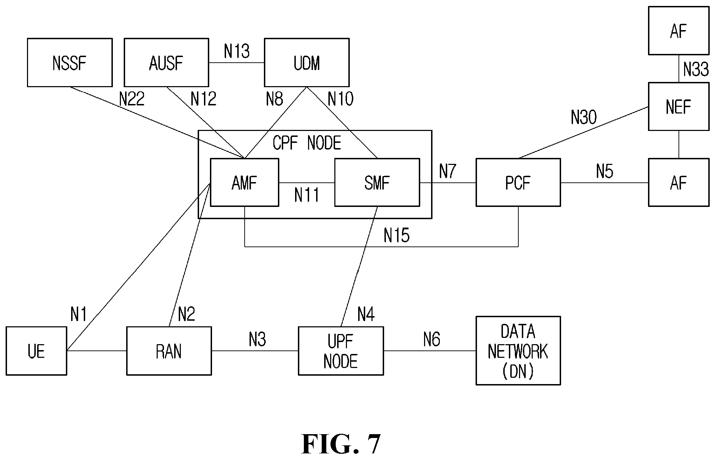

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

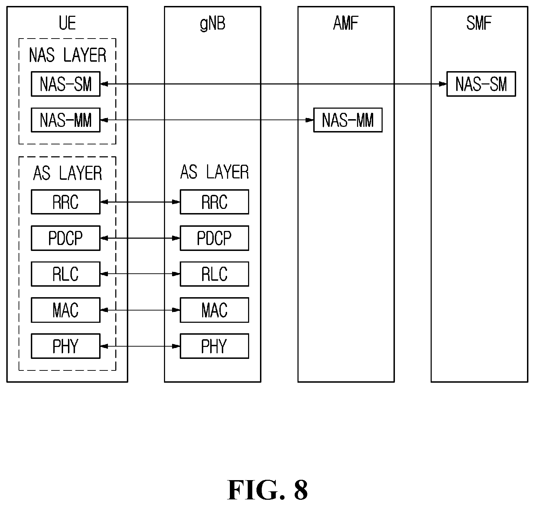

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

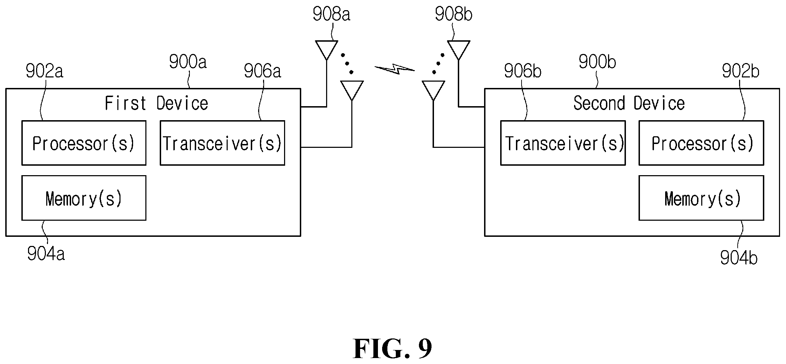

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

A multicast broadcast service (MBS) may be a service for transmitting the same content to a plurality of terminals through the same resource. A local MBS service and a location dependent MBS service may be MBS services provided at a specific location or in a specific area. As an example, the local MBS service may be a service in which the same content is delivered within the MBS service area. On the other hand, the location dependent MBS service may be an MBS service with different content for the same session in a segmented area within the MBS service area. However, it may be applied equally to local MBS service and location dependent MBS service, and is not limited to a specific form. That is, the MBS service may be provided in the MBS service area.

The MBS service area may be identified based on at least one of a cell list or a tracking area list. As an example, the MBS service may be provided based on geographic location or city address information, and the location information may be converted into a cell ID list or TAI (tracking area identity) list to provide the service. When a multicast session is associated with a local MBS service or a location dependent MBS service, and an SMF configures 5GC individual MBS traffic delivery, the SMF may subscribe to a service that receives a notification based on "terminal (UE) location" or "entry and exit of the terminal to and from an area of interest (AOI)" event from the AMF through a Namf_EventExposure service, and through this, may recognize a change in location of the terminal. As a specific example, based on the above-described event, the AMF may provide location information of the terminal to the SMF. As another example, an AOI may be set as an area of interest based on the above-described event, and information on whether the terminal enters or exits the set AOI may be delivered to the SMF, but may not be limited to this.

The SMF may recognize whether the terminal is located within the MBS service area through the above-described subscription. For example, if the terminal is not located within the MBS service area, the SMF may stop MBS traffic delivery to the terminal. The SMF may determine whether the terminal is located within another MBS service area of the multicast session if the terminal is not located within a current MBS service area, and provide the corresponding MBS service if the terminal is located in another MBS service area. On the other hand, if the terminal is not located within both the current MBS service area and another MBS service area of the multicast session, the SMF may stop MBS traffic delivery to the terminal. At this time, the SMF may unsubscribe from the service that receives the notification based on the "terminal (UE) location" or "entry and exit of the terminal to and from the area of interest (AOI)" event from the AMF through the Namf_EventExposure service.

Additionally, as an example, the local MBS service or location dependent MBS service may be provided in the MBS service area as described above, and the terminal may not receive MBS traffic if it is located outside the MBS service area. At this time, as an example, the terminal may obtain information on the local MBS service through MBS service announcement or NAS signaling. As a specific example, the terminal may receive an MBS session subscription grant/reject message including a cell ID list or a TAI list, and confirm the MBS service area based on this to receive the MBS service.

As another example, updates to the multicast local MBS service and location dependent MBS service may be performed. That is, the MBS service area may change for a specific multicast service. Here, if the terminal is located within the existing MBS service area but not within the updated new MBS service area, the RAN node may configure the terminal to not receive MBS data. That is, when the MBS service area of the MBS service provided to the terminal is updated, the MBS service may be provided to the terminal by reflecting the update.

As another example, a case where handover of a terminal is performed may be considered. As an example, a case may be considered where the terminal receives multicast data based on the corresponding MBS session ID and area session ID in the camped source RAN and then is handed over to a target RAN. Here, the source RAN may deliver the MBS session ID, area session ID, and MBS service area information to the target RAN. The target RAN may check whether a multicast service is provided based on the information received from the source RAN and provide the MBS service to the terminal. Here, as an example, if the target RAN supports the MBS service but the terminal is no longer located within the MBS service area, the target RAN may reject handover for the multicast session with cause indication. Additionally, if the target RAN supports the MBS service but the terminal is not located within the MBS service area, the target RAN may not allocate resources for the multicast session to the terminal.

As another example, when the terminal is handed over to the target cell outside the MBS service area in Xn handover performed based on the same AMF, the SMF may not deliver information related to the MBS session included in N2 SM Info to the target RAN. In addition, even in the case of N2 handover, when the terminal is handed over to the target cell outside the MBS service area, the SMF may not transmit information related to the MBS session included in N2 SM Info to the target RAN.

Additionally, as an example, in relation to 5GC individual MBS traffic delivery, if the terminal is not located within the MBS service area, the SMF may terminate 5GC individual MBS traffic delivery. Additionally, regarding 5GC shared MBS traffic delivery, since the RAN delivers MBS traffic only within the MBS service area, if the terminal is located outside the MBS service area, MBS traffic may not be received. That is, if the terminal is located outside the MBS service area, the terminal may not receive MBS traffic based on the MBS service.

Hereinafter, a method of efficiently supporting a local multicast service will be described. For example, in the following, the MBS may be interpreted the same as MBMS (Multimedia Broadcast/Multicast Service), and the MBS will be focused upon for convenience of explanation. In addition, an MBS session may include an MBS multicast session and an MBS broadcast session, and MBS data/traffic may include MBS multicast data/traffic and MBS broadcast data/traffic. In the following, for convenience of explanation, the MBS session will be focused upon. Additionally, the MBS service area or MBS area may include a multicast service area and a broadcast service area. In other words, the MBS may include both multicast and broadcast operations, and is not limited to a specific embodiment. Additionally, as an example, in the following, MBS session and MB session may be used interchangeably, and session and service may also be used interchangeably. Additionally, as an example, in the following, the base station may refer only to the gNB of the NG-RAN. As another example, in the following, the base station may include both a gNB and ng-eNB. However, this is only an example and may not be limited to a specific type of base station.

In addition, in the following, the local multicast service will be focused upon. Here, the local multicast service, as a location dependent multicast service, may include a service that the multicast service is provided only in a specific area, and may not be limited to a specific form.

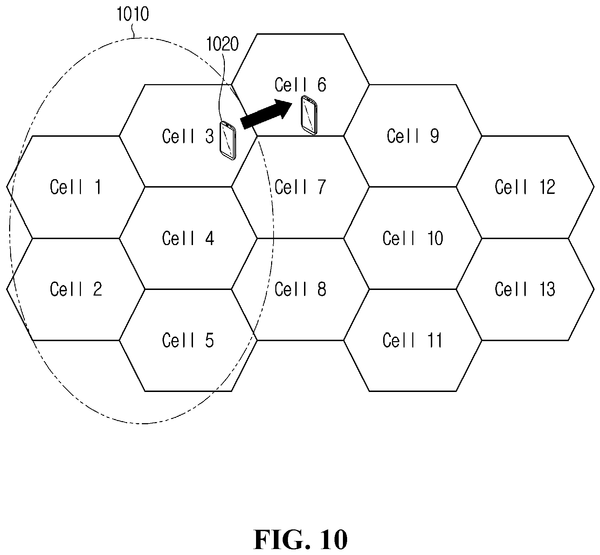

FIG. 10 is a diagram showing a method of providing a local multicast service applicable to the present disclosure. Referring to FIG. 10, an MBS service area 1010 in which a local multicast service is provided may be set. As an example, the MBS service area 1010 may be set through at least one of a cell ID list or a TAI list. A terminal 1020 may receive an MBS service within the MBS service area 1010 for a local multicast service or location dependent multicast service. Here, when the terminal 1020 leaves the MBS service area 1010, the terminal 1020 may start a timer for UE leaving the MBS service area 1010.

Here, the timer for terminal leaving may be a terminal-based timer. That is, the timer for terminal leaving may be configured and operated in the terminal 1020. The terminal 1020 may detect that the terminal 1020 moves out of the MBS service area based on the terminal's location information and start the timer based on this. As another example, the timer for terminal leaving may be an SMF-based timer that is configured and operated in SMF, which will be described later.

As an example, a case where a timer for terminal leaving is configured and operated in the terminal may be considered. If the terminal does not return to the corresponding MBS service area until the timer set in the terminal expires, the terminal may transmit a PDU session modification request to the SMF through the AMF. Here, the PDU session change request may indicate information on MBS service leaving of the terminal. Thereafter, the SMF may stop providing the MBS service to the terminal, as described above.

Here, the timer for terminal leaving configured in the terminal may be configured based on the SMF. As an example, the SMF may transmit a PDU session modification command instructing an MBS session join accept to the terminal in response to an MBS session join request from the terminal. Here, the PDU session modification command may include information on the timer for terminal leaving, and the terminal may configure the above-described timer for terminal leaving based on the PDU session modification command.

As another example, the timer for terminal leaving may be configured by being delivered to the terminal by the SMF through another SM NAS message (e.g., PDU session establishment accept). Alternatively, the timer for terminal leaving may be configured by being provided to the terminal by another NF (e.g., AMF, PCF, AF, etc.). Here, as an example, if the timer for terminal leaving is set, the terminal may provide the corresponding information to the SMF. Specifically, the terminal may transmit the above-described timer information when transmitting a message requesting subscription to a local multicast service to the SMF, but may not be limited to this. Additionally, as an example, the timer may be an implementation specific timer, implementation dependent timer, or implementation specific guard timer, and may not be limited to a specific type.

As another example, after the terminal leaves the MBS service area of the local multicast service (or location dependent multicast service), when the terminal is in a CM (connection management) connected state, a PDU session modification request for leaving the multicast service may be transmitted to the SMF. As an example, the terminal may transmit the PDU session modification request to the SMF regardless of the timer for terminal leaving. Alternatively, the terminal may transmit the PDU session modification request to the SMF, when the timer for terminal leaving has expired in combination with the condition of the timer for terminal leaving and it is in the CM connected state.

As another example, when the terminal transitions to the CM connected state, the PDU session modification request to leave the multicast service may be transmitted to the SMF. As an example, the terminal may transmit the PDU session modification request to the SMF regardless of the timer for terminal leaving. As another example, the terminal may transmit the PDU session modification request to the SMF, when the timer for terminal leaving has expired in combination with the condition of the timer for terminal leaving and it transitions to the CM connected state.

As another example, after the terminal leaves the MBS service area of the local multicast service (or location dependent multicast service), the terminal may transmit the PDU session modification request to leave the multicast service to the SMF when it is in an RRC connected state. As an example, the terminal may transmit the PDU session modification request to the SMF regardless of the timer for terminal leaving. As another example, the terminal may transmit the PDU session modification request to the SMF, when the timer for terminal leaving has expired in combination with the condition of the timer for terminal leaving and it is in the RRC connected state.

As another example, when the terminal transitions to the RRC connected state, the PDU session modification request to leave the multicast service may be transmitted to the SMF. As an example, the terminal may transmit the PDU session modification request to the SMF regardless of the timer for terminal leaving. As another example, the terminal may transmit the PDU session modification request to the SMF, when the timer for terminal leaving has expired in combination with the condition of the timer for terminal leaving and it is in the RRC connected state.

As another example, the terminal may transmit the PDU session modification request to the SMF by considering the timer for terminal leaving along with at least one of the mobility of the terminal, the trajectory of the terminal, or the direction/speed of movement of the terminal. That is, after the terminal leaves the MBS service area and the timer for terminal leaving expires, when the conditions for at least one of the mobility of the terminal, the trajectory of the terminal, or the direction/speed of movement of the terminal are satisfied, the PDU session modification request may be transmitted to the SMF.

As a specific example, if the timer for terminal leaving has expired and the direction is away from the MBS cell in consideration of the direction/speed of movement of the terminal, the terminal transmits the PDU session modification request to the SMF, and if the timer for terminal leaving has expired and the direction is close to the MBS cell in consideration of the direction/speed of movement of the terminal, the terminal may not transmit the PDU session modification request to the SMF. However, this is only one example and may not be limited thereto.

In other words, when the terminal leaves the MBS service area of the local multicast service (or local dependent multicast service), the terminal may transmit the PDU session modification request to leave the multicast service to the SMF based on various information/conditions (e.g., CM state, RRC state, mobility, trajectory, direction/speed of movement, etc.).

In addition, as an example, when joining a local multicast service (or location dependent multicast service), the terminal may provide, to the SMF, information related to a request to leave the MBS service area or information supporting leaving the local MBS service. As an example, the terminal may provide the above-described information to the SMF when an associated PDU session is established.

In addition, as an example, the terminal may transmit the request to leave the multicast service to the SMF using another SM NAS message (e.g., PDU Session Release Request) instead of the PDU session modification request message, and is limited to a specific embodiment. Additionally, as an example, the above-described timer may be used interchangeably with timer value or timer information, and is not limited to a specific embodiment. That is, in the above-mentioned case, when the terminal leaves the MBS service area, a terminal-based timer may operate, and whether to leave the MBS service may be determined based on whether the timer expires.

As another example, the network may trigger an operation for enabling the terminal to leave the MBS service area. If the terminal leaves the MBS service area, the SMF may trigger an operation for enabling the terminal to leave. Specifically, the SMF may check whether the terminal leaves the MBS service area for the local multicast service (or location dependent multicast service). That is, the SMF may check whether a new location of the terminal is inside or outside the MBS service area of the MBS session. As a specific example, the SMF may subscribe to a service that receives a notification based on "terminal (UE) location" or "entry/exit of the terminal to/from the area of interest (AOI)" event from the AMF through the Namf_EventExposure service. Through this, it is possible to recognize the new location of the terminal and check whether the terminal is located within the MBS service area.

Here, a case where the new location of the terminal is outside the MBS service area may be considered. In other words, it may be a case where the terminal leaves the MBS service area. The SMF may start the timer for terminal leaving for the local multicast service (or location dependent multicast service). As an example, when the terminal returns to the MBS service area before the timer for terminal leaving expires, the SMF may stop the timer and reactivate the MBS session for the terminal if the terminal maintains the MBS session and the MBS session is active.

As a specific example, when the terminal returns to the MBS service area before the timer for terminal leaving expires, the SMF may stop the timer and trigger an MBS session re-establishment procedure. Through this, the terminal may again receive MBS traffic for the local multicast service (or location dependent multicast service). Here, since it is an MBS session re-establishment procedure, the terminal may perform a procedure for MBS radio bearer establishment and traffic delivery after multicast establishment, without performing an initial procedure for terminal authentication or session establishment among multicast session subscription and session establishment.

In other words, if the terminal leaves the MBS service area and returns before the timer expires, the SMF may perform operation to resume the local multicast service (or location dependent multicast service) (or operation to resume MBS traffic transmission).

Here, as an example, the operation to resume the local multicast service (or location dependent multicast service) may involve performing some necessary procedures after session establishment during the multicast session subscription procedure, as described above. As another example, the operation to resume the local multicast service (or location dependent multicast service) (or the operation to resume MBS traffic transmission) may be performed separately, and is not limited to the above-described embodiment. For example, if the terminal returns to the MBS service area but the local multicast service (or location dependent multicast service) is in an inactive state, MBS traffic may not be delivered to the terminal. Accordingly, after the local multicast service (or location dependent multicast service) transitions to the active state, MBS traffic may be delivered to the terminal.

On the other hand, if the terminal is not located within the MBS service area before the timer for terminal leaving expires, the SMF may perform a terminal leaving (UE leaving) operation for the local multicast service (or location dependent multicast service). c

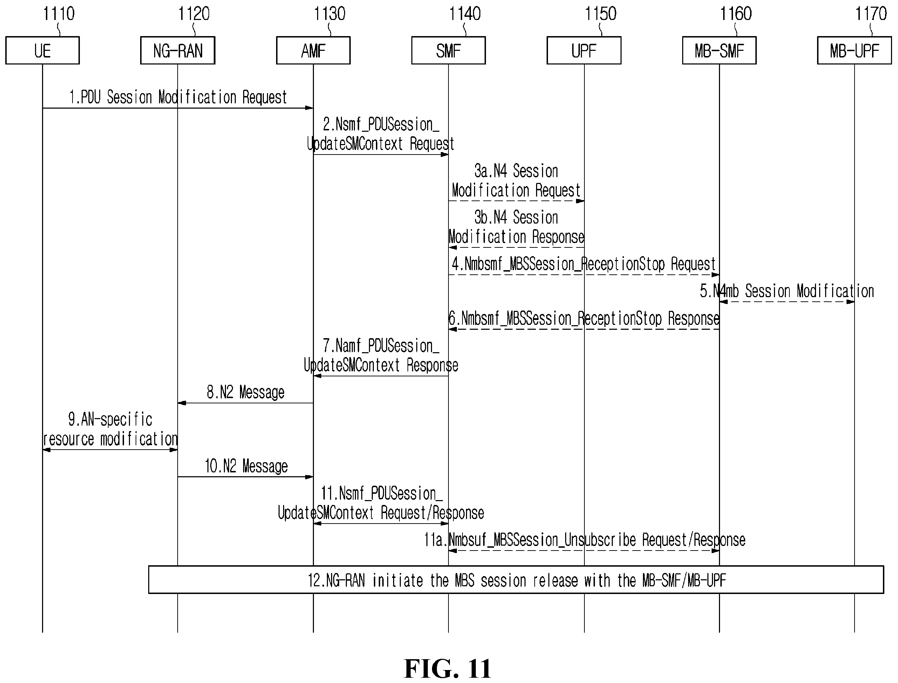

As an example, FIG. 11 is a diagram showing a method of enabling a terminal to leave an MBS session. Referring to FIG. 11, when the terminal1110 leaves the MBS session, the terminal 1110 may transmit a PDU session modification request to an AMF 1130. Thereafter, the AMF 1130 may transmit a message for a PDU session context update request to the SMF 1140 based on the request from the terminal 1110. The SMF 1140 may deliver the session modification request to a user plane function (UPF) based on the UPF 1150 and an N4 interface and receive a response. Thereafter, the SMF 1140 delivers an MBS session reception stop request to an MB-SMF 1160, and the MB-SMF 1160 may perform session modification with an MB-UPF 1170 and deliver information about this to the SMF 1160. Thereafter, the SMF 1140 may deliver a PDU session context update response to the AMF 1130. The AMF 1130 may change the resources of the terminal 1110 by delivering an N2 message to the RAN 1120 based on the PDU session context update response. Thereafter, the AMF 1130 may receive the N2 message in response from the RAN 1120 and transmit a PDU session context update request message to the SMF 1140 based on this. The SMF 1140 may remove an MBS session ID for the corresponding PDU session based on the PDU session context update request message. Thereafter, the SMF 1140 may exchange the corresponding information with the MB-SMF 1160. Thereafter, the MBS session provided to the terminal 1110 may be released based on the MB-SMF 1160 and MB-UPF 1170 and the MBS service may not be provided.

Here, as described above, if the SMF starts the timer for terminal leaving and the timer expires before the terminal returns to the MBS service area, the SMF may perform the session modification request operation in FIG. 11. Here, as an example, since the operation for unsubscribing from the MBS session is performed based on the timer for terminal leaving, the SMF may not receive a message for the PDU session modification request and may not deliver a response message thereto. That is, as described above, the PDU session context update response (Nsmf_PDUSession_UpdateSM Context Response) delivered from the SMF to the AMF may not be delivered. At this time, as an example, the "Namf_Communication_N1N2MessageTransfer" message may be used instead of the PDU session context update response to release the MBS session or remove from the MBS session based on expiration of the timer for terminal leaving. Here, the SMF may transmit, to the terminal, a PDU session modification command instructing that the terminal leaves the multicast MBS session, and the PDU session modification command may be included in the "Namf_Communication_N1N2MessageTransfer" described above. As an example, the "Namf_Communication_N1N2MessageTransfer" service operation may be expanded and used, and other service operations may be used, and are not limited to a specific embodiment.

As another example, the SMF may detect that the terminal moves out of the MBS service area and start the timer based on this. Here, along with the above-described timer, the terminal may also detect movement out of the MBS service area based on the location information of the terminal and start the timer based on this. That is, along with the timer started by the SMF based on the terminal moving out of the MBS service area, the terminal may also start the timer based on the terminal moving out of the MBS service area based on the location information of the terminal.

Here, the terminal may locally perform removal from the MBS session based on expiration of the timer on the terminal. That is, the terminal may delete the context of the multicast MBS session on its own without receiving, from the SMF, the PDU session modification command instructing that the terminal leaves the multicast MBS session. As an example, the timer on the terminal may be set in the terminal. As another example, the timer on the terminal may be configured by being received from the SMF, and is not limited to a specific implementation.

In addition, if the SMF stops provision of the MBS service to the terminal because the timer for terminal leaving has expired after the terminal leaves the MBS service area, the SMF may unsubscribe from a service that receives a notification based on "terminal (UE) location" or "entry/exit of the terminal to and from the area of interest (AOI)" event from the AMF through the Namf_EventExposure service. Additionally, as an example, when the timer for terminal leaving has expired, only necessary steps starting from step 3 of FIG. 11 may be performed, and may not be limited to a specific embodiment.

As described above, the timer for terminal leaving (UE leaving) may be set in the SMF. As an example, the SMF may receive the timer related to terminal leaving from the terminal. As a specific example, while the terminal performs a PDU session modification procedure to request subscription to a multicast service, information on the timer related to terminal leaving may be delivered to the SMF. As another example, the AF provides a configuration for the multicast service, and the timer related to terminal leaving may be set in the SMF, and is not limited to a specific embodiment. Additionally, the above-described timer may be an implementation specific timer, implementation dependent timer, or implementation specific guard timer, but is not limited thereto. As another example, the SMF may perform operation related to terminal leaving by further considering the timer related to terminal leaving and various information/conditions (e.g., UE mobility, trajectory, direction/speed of movement, analytics information such as UE mobility analytics provided by NWDAF) and is not limited to a specific embodiment.

In addition, as an example, in order for the SMF to start the timer related to UE leaving after the terminal leaves the MBS service area, the SMF may subscribe to a service that receives a notification based on "terminal (UE) location" or "entry/exit of the UE to the area of interest (AOI) event from the AMF through a Namf_EventExposure service, and through this, recognize changes in the terminal's location. Here, as an example, the MBS service area may be set based on at least one of the cell ID list or the TAI list, as described above. At this time, when the terminal leaves the MBS service area and does not return to the MBS service area even after a certain period of time, the RAN may provide terminal location information (e.g., cell ID) through the AMF. That is, instead of providing terminal location information to the AMF whenever the terminal location information changes while the terminal is within the served cells/tracking areas (cells/TAs), the RAN may provide the terminal location information to the AMF when the terminal moves out of the MBS service and does not return to the MBS service area until the timer starts and expires, but may not be limited to this.

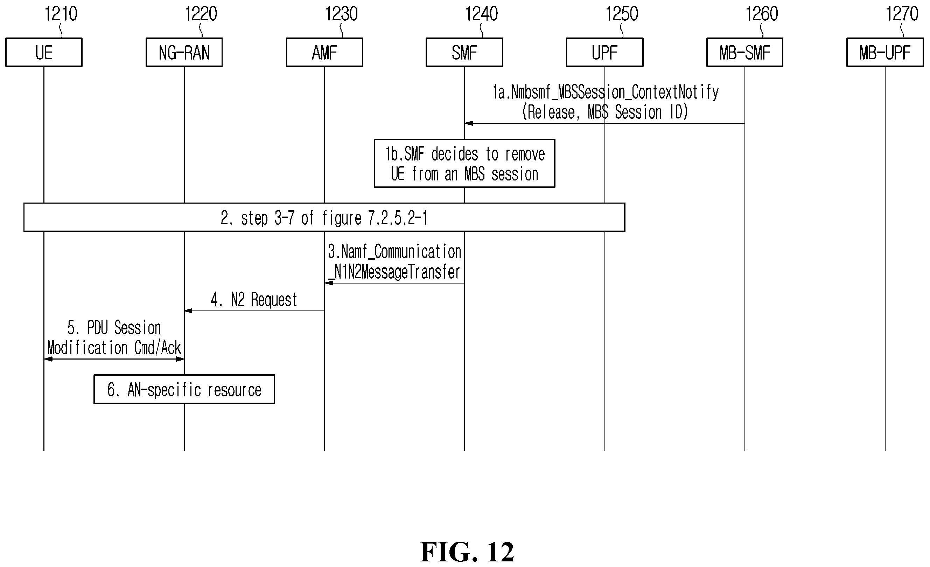

Additionally, FIG. 12 is a diagram showing a method of removing a multicast session based on a network request applicable to the present disclosure. Referring to FIG. 12, when the multicast session is removed, an MB-SMF 1260 may deliver a message instructing an MBS session ID and session release to an SMF 1240. Thereafter, the SMF 1240 may determine whether to remove the terminal 1210 from the corresponding MBS session and perform an operation based on this. As an example, the SMF 1240 may deliver a message based on "Namf_Communication_N1N2MessageTransfer" to the AMF 1230. That is, the SMF 1240 is a terminal subscribed to the corresponding MBS session and may deliver, to the AMF 1230, a request for message transfer to user plane activation terminal. Here, a message based on the N1 interface between the AMF 1230 and the terminal 1210 may include MBS session release information or removal information from the MBS session. The AMF 1230 may deliver a request message to the RAN 1220 based on the N2 interface, and the RAN 1220 may deliver a message based on the above-described N1 interface to the terminal. For example, the message based on the N1 interface is a PDU session modification command message and may include an MBS session ID and release request information. Thereafter, the RAN 1220 may release the MBS resources of the terminal 1210. Step 2 of FIG. 12 refers to steps 3-7 of section 7.2.5.2 of 3GPP TS 23.247.

Here, as an example, a case where the terminal leaves the MBS service area and the timer for terminal leaving configured in the SMF operates may be considered as described above. At this time, if the terminal does not return to the MBS service area before the timer for terminal leaving expires, the SMF may transmit the PDU session modification command to the terminal to instruct terminal leaving for the multicast MBS session. Here, the PDU session modification command for instructing terminal leaving for the multicast MBS session may be included in the message based on "Namf_Communication_N1N2MessageTransfer"delivered from the SMF to the AMF in FIG. 12. Thereafter, the AMF delivers a request message to the RAN based on the N2 interface, and the PDU session modification command to instruct terminal leaving may be delivered from the RAN to the terminal. Additionally, as an example, when the timer for terminal leaving expires, only necessary steps starting from step 1b of FIG. 12 may be performed, and may not be limited to a specific embodiment.

As another example, the MBS service may be provided based on a combination of terminal-based operation and network-based operation in relation to the terminal leaving the MBS service area. As an example, the SMF may start a first timer when the terminal leaves the MBS service area of the local MBS service (or location dependent MBS service). Here, when the SMF receives the PDU session modification request requesting MBS service leaving from the terminal before the first timer expires, the terminal may leave the MBS service based on FIG. 11 described above.

On the other hand, when the first timer expires, the SMF may start a second timer. At this time, if the terminal returns to the MBS service area before the second timer expires, operation to resume the MBS service may be performed, and if the MBS service is in an active state, MBS traffic may be delivered to the terminal. On the other hand, if the terminal does not return to the MBS service area until the second timer expires, the SMF removes the terminal from the MBS session, instructs the terminal to leave the MBS session, or unsubscribes from the terminal location-related notification event of the AMF, as described above.

Here, the first timer and the second timer may have the same form as the timer described above, may be combined with other condition information described above, and may not be limited to a specific embodiment.

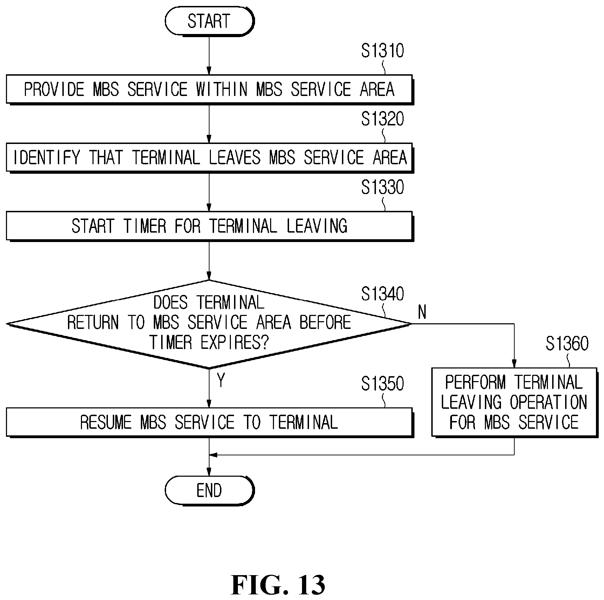

FIG. 13 is a diagram showing a method of managing whether a terminal leaves an MBS service area in a network applicable to the present disclosure.

Referring to FIG. 13, an SMF may provide a local MBS service (or location dependent MBS service) to a terminal within an MBS service area (S1310). At this time, the SMF may determine whether the terminal leaves the MBS service area (S1320). As an example, the SMF may subscribe to an event that receives terminal location-related information from an AMF and receive it, as described above. Through this, the SMF may check whether the terminal has left the MBS service area. Since the SMF may recognize the MBS service area for a specific MBS service, it may check whether the terminal has left the MBS service area through the terminal location-related information received from the AMF. Here, when the terminal has left the MBS service area, the SMF may start a timer for terminal leaving (S1330). At this time, the timer for terminal leaving may be a timer configured and operated in the SMF. As an example, the SMF may notify the terminal that network-based operations for the local MBS service (or location dependent MBS service) are supported. As a specific example, the SMF may instruct that a network-based operation for the local MBS service (or location dependent MBS service) is supported in at least one of a process of establishing a PDU session associated with the terminal or a process of performing an MBS service join request of the terminal. Additionally, as an example, the SMF and the terminal may determine whether to support the network-based operation through negotiation on support for the network-based operation, and are not limited to the above-described embodiment. That is, the SMF may deliver, to the terminal, information specifying that whether to provide the MBS service may be determined based on the timer for terminal leaving, which is operated in the SMF.

At this time, the timer operates based on the terminal leaving, and when the terminal returns to the MBS area before the timer expires (S1340), the SMF may resume provision of the MBS service to the terminal (S1350). As an example, the SMF may perform operation to resume provision of the MBS service to the terminal. As a specific example, some procedures performed during the MBS session establishment process may be performed to resume the MBS service, and are not limited to a specific embodiment. Here, after the terminal returns to the MBS service area, if the MBS service is in an inactive state, MBS traffic may not be delivered to the terminal, and if the MBS service is in an active state, MBS traffic may be delivered to the terminal.

On the other hand, when the timer operates based on terminal leaving and when the terminal does not return to the MBS area before the timer expires (S1340), the SMF performs operation for UE leaving for the MBS service (S1360). As an example, the SMF may remove the terminal from the MBS session. Specifically, the SMF may release the MBS session by delivering an MBS session ID and release request to the terminal. As another example, the SMF may instruct the terminal to leave the MBS session. As an example, the SMF may send, to the terminal, information on terminal leaving through a PDU session modification command, as described above. As another example, the SMF may unsubscribe from an event that receives terminal location-related information from the AMF, as described above.

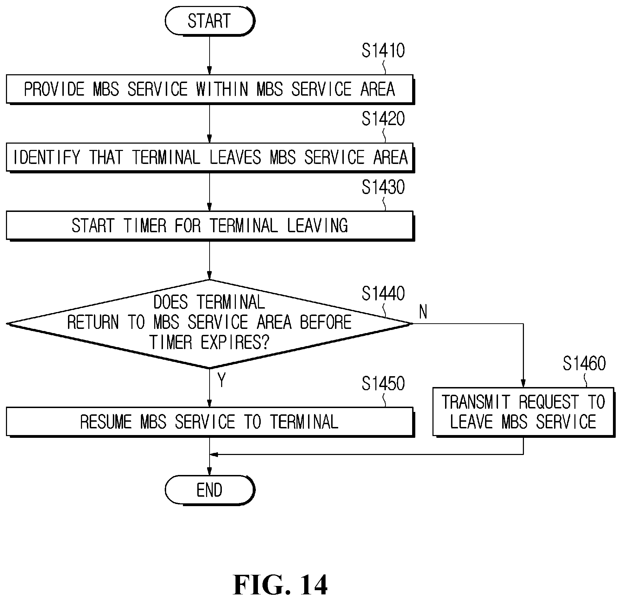

FIG. 14 is a diagram showing a method of managing whether a terminal leaves an MBS service area based on a terminal applicable to the present disclosure.

Referring to FIG. 14, the terminal may receive a local MBS service (or location dependent MBS service) within the MBS service area (S1410). At this time, the terminal may determine whether the terminal leaves the MBS service are. (S1420). As an example, the terminal may obtain information on the MBS service area through a response received after requesting a join for the MBS service, and determine whether the terminal has left the MBS service area based on the terminal location. Here, when the terminal leaves the MBS service area, the terminal may start a timer for terminal leaving (S1430). At this time, the timer for terminal leaving may be a timer configured and operated in the terminal. As an example, the terminal may be configured by receiving information on the timer for terminal leaving through at least one of SMF or other NF, and is not limited to a specific embodiment. Additionally, when the timer is configured in the terminal, the terminal may provide information on the timer to the SMF.

At this time, the timer operates based on terminal leaving, and when the terminal returns to the MBS area before the timer expires (S1440), the terminal may receive the MBS service again (S1450). Here, after the terminal returns to the MBS service area, if the MBS service is in an inactive state, MBS traffic may not be delivered to the terminal, and if the MBS service is in an active state, MBS traffic may be delivered to the terminal.

On the other hand, if the timer operates based on terminal leaving, and the terminal does not return to the MBS area before the timer expires (S1440), the terminal may deliver a PDU session modification request including an MBS service leaving request to the SMF to unsubscribe from the MBS service (S1460).

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure is defined by the appended claims. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a session management function, SMF comprising:
checking whether a location of a terminal is inside or outside a multicast broadcast service, MBS, service area,
wherein the terminal is provided an MBS service in the MBS service area;
activating an MBS session based on the terminal coming back to the MBS service area before an expiration of a timer;
wherein the timer is related to the terminal leaving the MBS service area; and
based on the timer expiring: i) removing the terminal from the MBS session based on a delivery to the terminal of a Protocol Data Unit, PDU, session modification command instructing removal from the MBS session, and ii) unsubscribing to an access and mobility management function, AMF, from notifications about terminal location related information.

2. The method of claim 1, wherein activating the MBS session comprises, providing a MBS traffic to the terminal, based on the terminal coming back to the MBS service area before the timer expires and the MBS service being in an active state.

3. The method of claim 1, wherein, in case that the MBS service is in an inactive state, a MBS traffic is provided to the terminal based on the MBS service transitioning to an active state.

4. The method of claim 1, wherein the terminal is removed from the MBS service, based on the terminal being located outside the MBS service area until the timer expires.

5. The method of claim 4, further comprising:
removing an MBS session identifier, ID for the MBS service from related PDU session context.

6. The method of claim 1, wherein the terminal location related information comprises at least one of terminal location information or information on entry/exit of the terminal to/from an area of interest, AOI.

7. The method of claim 1, wherein the PDU session modification command includes at least one of an MBS session ID for the MBS service and release or removal request information.

8. The method of claim 1, wherein the PDU session modification command indicates the terminal leaving from the MBS session.

9. The method of claim 1, wherein the SMF delivers information on whether to support a network based MBS service to the terminal in at least one of a process of establishing a PDU session associated with the terminal or a process in which the terminal joins the MBS service.

10. The method of claim 1, wherein the timer is configured in the SMF.

11. An apparatus arranged to implement a method of one of claims 1 to 10.

## Patentansprüche

1. Verfahren, das von einer Sitzungsverwaltungsfunktion, SMF, durchgeführt wird, umfassend:
Prüfen, ob sich ein Standort eines Endgeräts innerhalb oder außerhalb eines Multicast-Broadcast-Dienst-, MBS-, Dienstbereichs befindet,
wobei dem Endgerät innerhalb des MBS-Dienstbereichs ein MBS-Dienst bereitgestellt wird;
Aktivieren einer MBS-Sitzung auf der Grundlage dessen, dass das Endgerät vor Ablauf eines Timers in den MBS-Dienstbereich zurückkehrt;
wobei der Timer mit einem Verlassen des MBS-Dienstbereichs durch das Endgerät in Zusammenhang steht; und
auf der Grundlage des Ablaufs des Timers: i) Entfernen des Endgeräts aus der MBS-Sitzung auf der Grundlage einer Zustellung eines Sitzungsmodifikationsbefehls für eine Protokolldateneinheit, PDU, an das Endgerät, wobei der Sitzungsmodifikationsbefehl das Entfernen aus der MBS-Sitzung anweist, und ii) Abbestellen von Benachrichtigungen über standortbezogene Informationen des Endgeräts bei einer Zugangs- und Mobilitätsverwaltungsfunktion, AMF.

2. Verfahren nach Anspruch 1, wobei das Aktivieren der MBS-Sitzung umfasst, dem Endgerät MBS-Verkehr bereitzustellen, auf der Grundlage, dass das Endgerät vor Ablauf des Timers in den MBS-Dienstbereich zurückkehrt und sich der MBS-Dienst in einem aktiven Zustand befindet.

3. Verfahren nach Anspruch 1, wobei, falls sich der MBS-Dienst in einem inaktiven Zustand befindet, dem Endgerät MBS-Verkehr bereitgestellt wird, auf der Grundlage, dass der MBS-Dienst in einen aktiven Zustand übergeht.

4. Verfahren nach Anspruch 1, wobei das Endgerät aus dem MBS-Dienst entfernt wird, auf der Grundlage, dass sich das Endgerät bis zum Ablauf des Timers außerhalb des MBS-Dienstbereichs befindet.

5. Verfahren nach Anspruch 4, ferner umfassend:
Entfernen einer MBS-Sitzungskennung, ID, für den MBS-Dienst aus einem zugehörigen PDU-Sitzungskontext.

6. Verfahren nach Anspruch 1, wobei die standortbezogenen Informationen des Endgeräts mindestens eines umfassen von Standortinformationen des Endgeräts oder Informationen über ein Eintreten des Endgeräts in bzw. ein Verlassen des Endgeräts aus einem Interessenbereich, AOI.

7. Verfahren nach Anspruch 1, wobei der PDU-Sitzungsmodifikationsbefehl mindestens eines umfasst von einer MBS-Sitzungs-ID für den MBS-Dienst und Freigabe- oder Entfernungsanforderungsinformationen.

8. Verfahren nach Anspruch 1, wobei der PDU-Sitzungsmodifikationsbefehl anzeigt, dass das Endgerät die MBS-Sitzung verlässt.

9. Verfahren nach Anspruch 1, wobei die SMF dem Endgerät Informationen darüber bereitstellt, ob ein netzwerkbasierter MBS-Dienst unterstützt wird, in mindestens einem von einem Vorgang zum Einrichten einer dem Endgerät zugeordneten PDU-Sitzung oder einem Vorgang, in dem das Endgerät dem MBS-Dienst beitritt.

10. Verfahren nach Anspruch 1, wobei der Timer in der SMF konfiguriert wird.

11. Vorrichtung, die eingerichtet ist, ein Verfahren nach einem der Ansprüche 1 bis 10 zu implementieren.

## Revendications

1. Procédé, exécuté par une fonction de gestion de session, SMF, comprenant:
la vérification visant à savoir si l'emplacement d'un terminal se trouve à l'intérieur ou à l'extérieur de la zone de couverture d'un service de multidiffusion, MBS,
dans lequel le terminal bénéficie d'un service MBS dans la zone de couverture du MBS;
l'activation d'une session MBS sur la base du fait que le terminal revient dans la zone de couverture du MBS avant l'expiration d'un temporisation;
dans lequel la temporisation est liée au départ du terminal de la zone de couverture du MBS; et
en fonction de l'expiration de la temporisation: i) le retrait du terminal de la session MBS à la suite de la transmission au terminal d'une commande de modification de session d'unité de données de protocole, PDU, ordonnant son retrait de la session MBS, et ii) le désabonnement auprès d'une fonction de gestion d'accès et de mobilité, AMF, des notifications concernant les informations relatives à la localisation du terminal.

2. Procédé selon la revendication 1, dans lequel l'activation de la session MBS comprend,
la fourniture d'un trafic MBS au terminal, à condition que le terminal retourne dans la zone de couverture du MBS avant l'expiration de la temporisation et que le service MBS soit actif.

3. Procédé selon la revendication 1, dans lequel dans le cas où le service MBS serait inactif, un trafic MBS est fourni au terminal dès que le service MBS passe à l'état actif.

4. Procédé selon la revendication 1, dans lequel le terminal est retiré du service MBS, lorsqu'il se trouve en dehors de la zone de couverture du MBS, et ce jusqu'à l'expiration de la temporisation.

5. Procédé selon la revendication 4, comprenant en outre:
la suppression d'un identifiant de session MBS, l'ID du service MBS, du contexte de session PDU associé.

6. Procédé selon la revendication 1, dans lequel les informations relatives à la localisation du terminal comprennent l'une parmi des informations d'emplacement de terminal ou des informations concernant l'entrée/la sortie du terminal dans/d'une zone d'intérêt, AOI.

7. Procédé selon la revendication 1, dans lequel la commande de modification de session PDU comprend au moins l'une parmi un ID de session MBS pour le service MBS et des informations relatives à une demande de libération ou de suppression.

8. Procédé selon la revendication 1, dans lequel la commande de modification de session PDU indique que le terminal quitte la session MBS.

9. Procédé selon la revendication 1, dans lequel la SMF délivre des informations indiquant s'il convient de prendre en charge un service MBS basé sur le réseau au terminal dans, au moins l'un parmi un processus d'établissement d'une session PDU associée au terminal ou un processus par lequel le terminal rejoint le service MBS.

10. Procédé selon la revendication 1, dans lequel la temporisation est configurée dans la SMF.

11. Appareil conçu pour mettre en œuvre un procédé selon l'une quelconque des revendications 1 à 10.
